# EUROPÄISCHE PATENTSCHRIFT

(11) **EP 1 469 959 B1**
(45) Veröffentlichungstag und Bekanntmachung des Hinweises auf die Patenterteilung: **27.09.2006**
(21) Anmeldenummer: 02799047.2
(22) Anmeldetag: 28.11.2002
(51) Int. Cl.: B21K 1/76

(54) **VERFAHREN ZUM HERSTELLEN EINER ZAHNSTANGE**
METHOD FOR PRODUCING A STEERING RACK
PROCEDE POUR FABRIQUER UNE CREMAILLERE DE DIRECTION

(30) Priorität: 31.01.2002 DE 10203888
(43) Veröffentlichungstag der Anmeldung: 27.10.2004
(73) Patentinhaber: ZF Lenksysteme GmbH, 73527 Schwäbisch Gmünd (DE)
(72) Erfinder: BRENNER, Alfred, 73540 Heubach (DE)
(86) Internationale Anmeldenummer: PCT/EP2002/013419
(87) Internationale Veröffentlichungsnummer: WO 2003/064074

(56) Entgegenhaltungen:
- DE-A- 3 202 254
- GB-A- 2 108 026
- PATENT ABSTRACTS OF JAPAN vol. 2000, no. 20, 10. Juli 2001 (2001-07-10) -& JP 2001 079639 A (GOOSHUU:KK), 27. März 2001 (2001-03-27)

## Beschreibung

Die Erfindung betrifft ein Verfahren zum Herstellen einer Zahnstange, zur Verwendung vorzugsweise in Lenkgetrieben für Kraftfahrzeuge. Zum Stand der Technik wird hingewiesen auf DE 32 02 254 C2, von der die hier vorliegende Erfindung ausgeht. Es handelt sich hier um ein Verfahren, welches einen spanlosen Umformprozeß umfaßt, bei dem mit Hilfe von Umform-Werkzeugen an einem Rohling die gewünschte Verzahnung der Zahnstange geformt wird. Im Einzelnen ist dabei folgendes vorgesehen: Die Zähne der Zahnstange werden durch entsprechende Negativ-Zähne gebildet, die in einem der beiden Umform-Werkzeuge (z.B. im Obergesenk) vorgesehen sind. Der Rücken der Zahnstange wird durch einen Negativ-Rücken gebildet, der in dem anderen Umform-Werkzeug (z.B. im Untergesenk) vorgesehen ist. Während des Umformprozesses bilden sich aus überschüssigem Material zwischen den beiden Umform-Werkzeugen zwei seitliche Grate.

Gemäß DE 32 02 254 ist der im Untergesenk gebildete Negativ-Rücken derart geformt, daß der Querschnitt der fertigen Zahnstange angenähert eine y-Profilform aufweist. Bekannt ist jedoch auch eine Zahnstange, die ein Rundprofil aufweist. Die hier vorliegende Erfindung ist bei beiden bekannten Profilformen und ebenso bei anderen möglichen Profilformen anwendbar.

Gemäß DE 32 02 254 ist im Obergesenk die Länge der Negativ-Zähne gleich der in der fertigen Zahnstange gewünschten Zahnbreite. In der Praxis wurde zwar versucht, durch Anwendung des Taumelpressens den Materialfluß derart zu beeinflussen, daß die Negativ-Zähne möglichst vollkommen mit Material ausgefüllt werden. Man wollte hierdurch über die gesamte Zahnbreite eine saubere Profilform erhalten, möglichst ohne Nacharbeitung. Es hat sich jedoch gezeigt, daß ein solcher idealer Verlauf des Umformprozesses in der Regel nicht erzielbar ist. Insbesondere konnte nicht erreicht werden, daß das Material in dem einzelnen Negativ-Zahn vollkommen bis an die beiden Stirnflächen des Negativ-Zahns vordringt. Im Ergebnis konnte deshalb nur eine verringerte wirksame Zahnbreite erzielt werden. Mit anderen Worten: Die Verzahnung konnte seitlich nicht vollkommen ausgeformt werden. Dies hatte zur Folge (z.B. bei Anwendung der bekannten Zahnstange in einem Fahrzeug-Lenkgetriebe), daß sich auf den Zahnflanken die Flächenpressung unzulässig erhöhte und somit die Gefahr vorzeitigen Verschleißens bestand.

In der GB-A-2 108 026 wird ein Gesenk zur Herstellung einer Zahnstange beschrieben, dessen Untergesenk seitliche Ausnehmungen aufweist. Jedoch sind diese Ausnehmungen nur zur Aufnahme des Grates bestimmt, sind selber glatt und reichen nicht an die zu formenden Zähne heran.

Der vorliegenden Erfindung liegt deshalb die Aufgabe zugrunde, ein Verfahren zum Herstellen einer Zahnstange anzugeben, bei dem es mit dem spanlosen Umform-Pro Prozeß gelingt, die Zähne der Zahnstange vollkommen auszuformen; d.h. die nutzbare Zahnbreite der Verzahnung soll sich möglichst über den gesamten zur Verfügung stehenden Querschnitt der fertigen Zahnstange erstrecken. Dabei soll wie bisher ein stangenförmiger Rohling in einem einzigen Arbeitsgang spanlos umgeformt werden.

Diese Aufgabe wird durch das im Anspruch 1 angegebene Verfahren gelöst.

Nach dem erfindungsgemäßen Lösungsprinzip ist der spanlose Umform-Prozeß derart gestaltet, daß ein größerer Materialfluß als bisher nach beiden Seiten hin in die seitlichen Grate hinein stattfindet. Wesentlich ist hierbei, daß eine ausreichende Materialmenge in Verlängerungen der Negativ-Zähne hineingepreßt wird. Gegenüber bisher wird somit eine vergrößerte, bis in die Bereiche der seitlichen Grate reichende Zahnbreite gebildet. Wenn nun die verlängerten Negativ-Zähne nicht vollkommen bis an ihre Stirnflächen mit Material ausgefüllt werden, so ist dennoch die nutzbare Zahnbreite ausreichend groß; in der Regel wird sie sich zumindest über den gesamten Querschnitt der Zahnstange erstrecken oder sogar darüberhinaus. Sollten die zwei Grate mit den überstehenden, nicht ausgeformten Verzahnungsbereichen bei der späteren Verwendung der Zahnstange stören, so können diese abgearbeitet werden, beispielsweise durch einen spanabhebenden Bearbeitungsvorgang.

Als wesentlicher Vorteil der Erfindung ergibt sich, daß im Betrieb die Flächenpressung auf den Zahnflanken der Zahnstange höchstens den normalen, zulässigen Wert annimmt und daß somit die bisher bestehende Gefahr vorzeitigen Verschleißens beseitigt ist.

Eine zum Durchführen des zuvor beschriebenen erfindungsgemäßen Verfahrens geeignete Vorrichtung weist die Besonderheit auf, daß - im Querschnitt durch das Obergesenk gesehen - die Länge der Negativ-Zähne sich beidseitig bis in die Bereiche der sich bildenden seitlichen Grate hinein erstreckt.

Der gemäß der Erfindung erzielte freie Materialfluß (nach beiden Seiten in die Grate hinein) kann dadurch noch weiter verbessert werden, daß man (gemäß Anspruch 2) einen Teil des Materials in eine Verbreiterung des Negativ-Rückens hineinpreßt. Hierzu ist im Untergesenk vorgesehen, daß der Negativ-Rücken im Bereich der Preßebene auf jeder Seite eine Ausnehmung aufweist, die sich in den Bereich des sich bildenden seitlichen Grates hinein erstreckt. Hierdurch bilden sich dickere seitliche Grate als bisher; in erster Linie wird jedoch erreicht, daß das Material besser als bisher in die Negativ-Zähne eindringt. Zu diesem Zweck Ausgestaltung der erfindungsgemäßen Vorrichtung, liegt im Untergesenk die Mittelachse der Zahnstange tiefer als die Preßebene.

Weitere Ausgestaltungen des erfindungsgemäßen Verfahrens sind in dem Anspruch 3 angegeben.

Es folgen nun weitere Erläuterungen der Erfindung anhand der beigefügten Zeichnungen.

Es zeigt:
- Fig. 1A und 1B: das Herstellen einer Zahnstange durch Umformen eines Rohlings.
- Fig. 2A: einen Querschnitt entlang der Linie II-II der Fig. 1B.
- Fig. 2B: die Zahnstange der Fig. 2A nach der Fertigbearbeitung.
- Fig. 3A, 3B und 4A, 4B: weitere unterschiedliche Ausführungsbeispiele.

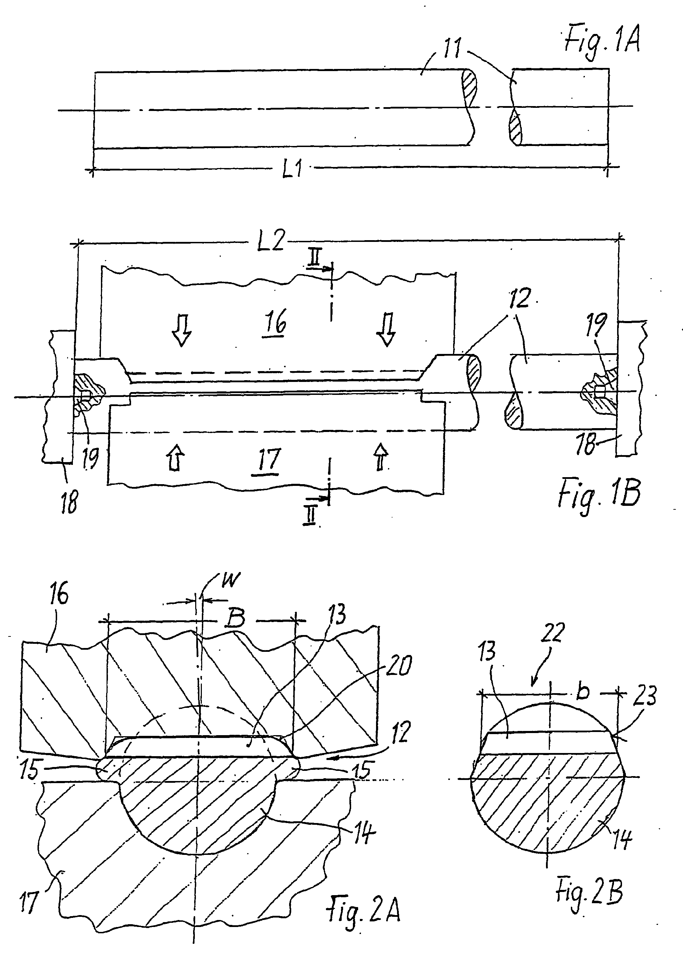

Der in Fig. 1 dargestellte stangenförmige Rohling 11 (mit Länge L1) wird gemäß den Figuren 1B und 2A zwischen zwei Umform-Werkzeugen, nämlich einem Obergesenk 16 und einem Untergesenk 17 spanlos umgeformt. Im Einzelnen werden einerseits die Zähne 13 und andererseits der Rücken 14 der Zahnstange gebildet, wobei die Zahnstange (jetzt mit 12 bezeichnet) eine Längung erfährt, gemäß Fig. 2 auf die Länge L2. Vorteilhaft ist es, die Zahnstange zwischen zwei Stirnformwerkzeugen 18 einzuspannen; diese formen an jedem Ende der Zahnstange eine Zentrierung 19.

Zum Formen der Zähne 13 der Zahnstange 12 sind im Obergesenk 16 Negativ-Zähne vorgesehen. In ähnlicher

Weise ist zum Formen des Rückens 14 der Zahnstange 12 im Untergesenk 17 ein Negativ-Rücken vorgesehen. Falls der Rohling 11 schon eine Form aufweist, die der gewünschten Form des Rückens 14 entspricht, so dient das Untergesenk 17 beim Formen der Zähne 13 im wesentlichen nur zur Abstützung des Rohlings und gegebenenfalls zur Erhöhung der Oberflächengüte des Zahnstangen-Rückens 14.

Die sich bei dem spanlosen Umform-Prozeß zwischen den Gesenken 16 und 17 bildenden seitlichen Grate sind in Fig. 2A mit 15 bezeichnet. Gemäß der Erfindung erstrecken sich die Negativ-Zähne 20 weit über das Kreisprofil des Rohlings hinaus bis in die Bereiche der seitlichen Grate 15. Die somit vergrößerte (z.B. am Zahnfuß gemessene) Zahnbreite B ist größer als die in der fertigen Zahnstange (gemäß Fig. 2B mit 22 bezeichnet) benötigte Zahnbreite b. Hierdurch wird berücksichtigt, daß bei dem spanlosen Umformprozeß die Zähne 13 meistens nicht vollkommen ausgeformt werden; d.h. die Negativ-Zähne füllen sich nicht vollständig mit Material. Die Grate 15 werden nach dem Umform-Prozeß durch spanabhebende Bearbeitung (z.B. durch Fräsen) entfernt. Hierdurch erhält die fertige Zahnstange 22 vollkommen ausgeformte Zähne mit beispielsweise ebenen, schrägen Stirnflächen 23.

Der spanlose Umformprozeß findet vorzugsweise unter Anwendung des aus DE 32 02 254 bekannten Taumelpressens statt. Der Taumelwinkel ist in Fig. 2A mit w bezeichnet.

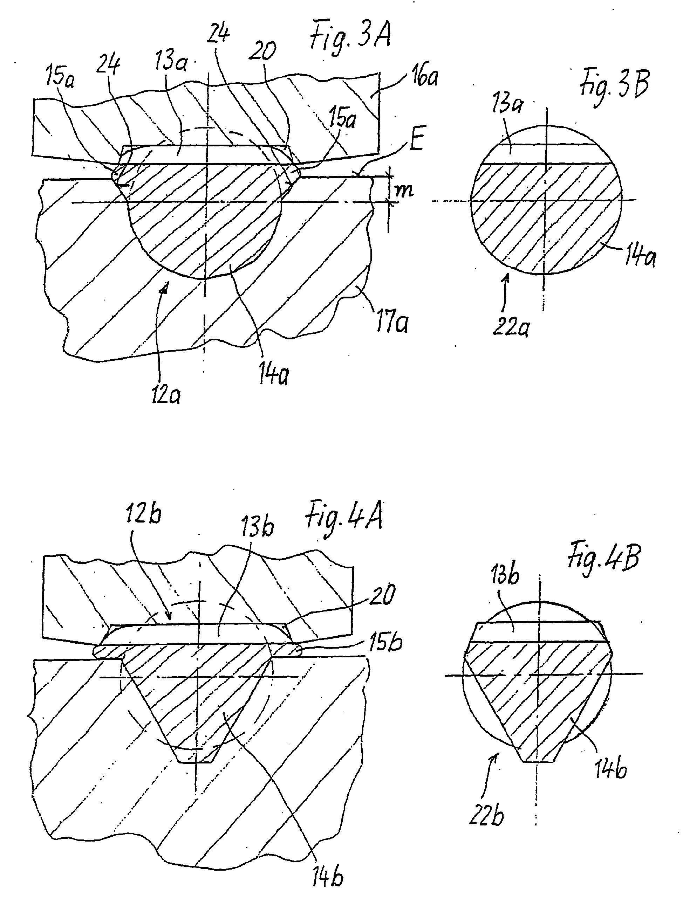

Bei der Zahnstange 12a bzw. 22a gemäß den Figuren 3A und 3B ist wiederum vorgesehen, daß sich die zum Bilden der Zähne 13a dienenden Negativ-Zähne 20 beidseitig bis in die Bereiche der seitlichen Grate 15 hinein erstrecken. Gegenüber Fig. 2A ist nun aber in Fig. 3A eine zusätzliche Maßnahme getroffen: Im Untergesenk 17a weist der zum Bilden des Rückens 14a dienende Negativ-Rücken im Bereich der Preßebene E auf beiden Seiten je eine Ausnehmung 24 auf. Diese Ausnehmungen 24 füllen sich beim Umformprozeß mit Material, so daß hier ein besser definiertes Bilden der seitlichen Grate 15a stattfindet. Vorzugsweise wird man bei diesem Ausführungsbeispiel die Anordnung derart treffen, daß im Untergesenk 17a die Mittelachse der Zahnstange um das Maß m tiefer liegt als die Preßebene E. Das Obergesenk 16a entspricht im wesentlichen dem Obergesenk 16 der Fig. 2A. Nach dem Umformprozeß werden wiederum die Grate 15a entfernt, beispielsweise durch Drehen, so daß man ein kreisrundes Profil erhält, wie in Fig. 3B dargestellt ist.

Das Herstellverfahren für die in den Figuren 4A und 4B dargestellte Zahnstange 12b bzw. 22b mit Zähnen 13b hat weitgehend Ähnlichkeit mit demjenigen der Figuren 2A und 2B. Nunmehr hat jedoch der Zahnrücken 14b anstelle eines Rundprofiles ein in grober Annäherung dreieckiges Profil. Man nennt das Profil der gemäß Fig. 4B fertiggestellten Zahnstange auch "y-Profil".

## Patentansprüche

1. Verfahren zum Herstellen einer Zahnstange (12,22), bei dem ein stangenförmiger Rohling (11) mittels zweier aneinander zu pressenden Werkzeuge (16,17) spanlos umgeformt wird, und zwar in der folgenden Weise:
a) die Zähne (13) der Zahnstange (12) werden durch entsprechende Negativ-Zähne gebildet, die in einem der beiden Umformwerkzeuge (z.B. im Obergesenk 16) vorgesehen sind;
b) der Rücken (14) der Zahnstange (12) wird durch einen Negativ-Rücken gebildet, der in dem anderen Umformwerkzeug (z.B. im Untergesenk 17) vorgesehen ist;
c) aus überschüssigem Material werden zwischen den beiden Umformwerkzeugen zwei seitliche Grate (15) gebildet;
d) bei dem spanlosen Umformprozeß wird Material in Verlängerungen der Negativ-Zähne (20) hineinpreßt, so daß eine vergrößerte, bis in die Bereiche der seitlichen Grate (15) reichende Zahnbreite (B) gebildet wird;
e) wobei der Umformprozeß unter Anwendung des an sich bekannten Taumelpressens durchgeführt wird und
f) mit dem Umformprozeß eine Längung des Rohlings bewirkt wird.

2. Verfahren nach Anspruch 1
**dadurch gekennzeichnet, daß** Material in Ausnehmungen (24) hineinpreßt wird, die im Bereich der Preßebene (E) des Untergesenks (17a) vorgesehen sind, so daß in den Ausnehmungen (24) die seitlichen Grate (15a) gebildet werden.

3. Verfahren nach Anspruch 1,
**dadurch gekennzeichnet, daß** bei der Längung des Rohlings im Bereich wenigstens einer seiner beiden Stirnflächen eine Zentriereinrichtung (19) geformt wird.

## Claims

1. Method for producing a rack (12, 22), in which a rod-shaped blank (11) is formed without cutting by means of two dies (16, 17) designed to be pressed towards one another, specifically as follows:
a) the teeth (13) of the rack (12) are formed by corresponding negative teeth, which are provided in one of the two forming dies (e.g. in the top die 16);
b) the back (14) of the rack (12) is formed by a negative back, which is provided in the other forming die (e.g. in the bottom die 17);
c) two lateral burrs (15) are formed from excess material between the two forming dies;
d) during the non-cutting forming process, material is pressed into extensions of the negative teeth (20), such that an enlarged tooth width (B) extending into the areas of the lateral burrs (15) is formed;
e) wherein the forming process is performed using wobble pressing, which is known per se and
f) the blank is extended by the forming process.

2. Method according to Claim 1,
**characterized in that** material is pressed into recesses (24) which are provided in the area of the pressing plane (E) of the bottom die (17a), such that the lateral burrs (15a) are formed in the recesses (24).

3. Method according to Claim 1,
**characterized in that**, in the event of extension of the blank in the area of at least one of its two end faces, a centring means (19) is formed.

## Revendications

1. Procédé de fabrication d'une crémaillère (12, 22) dans lequel on refaçonne une ébauche en forme de barre (11) au moyen de deux outils (16, 17) devant être pressés l'un contre l'autre, à savoir de la façon suivante :
a) les dents (13) de la crémaillère (12) sont formées par des dents négatives correspondantes, qui sont prévues dans l'un des deux outils de refaçonnage (par exemple dans la matrice supérieure 16) ;
b) le dos (14) de la crémaillère (12) est formé par un dos négatif, qui est prévu dans l'autre outil de refaçonnage (par exemple dans la matrice inférieure 17) ;
c) à partir de matière excédentaire, deux bavures latérales (15) sont formées entre les deux outils de refaçonnage ;
d) lors d'un processus de refaçonnage sans enlèvement de copeaux, on presse de la matière dans le prolongement des dents négatives (20), de façon à créer une largeur de dents agrandie (B), arrivant jusque dans les zones des bavures latérales (15) ;
e) le processus de refaçonnage étant réalisé sous utilisation de la compression par nutation connue en soi et
f) le processus de refaçonnage provoque un allongement de l'ébauche.

2. Procédé selon la revendication 1,
**caractérisé en ce qu'**on presse la matière dans des évidements (24) qui sont prévus dans la zone du plan de compression (E) de la matrice inférieure (17a), de façon à former des bavures latérales (15a) dans les évidements (24).

3. Procédé selon la revendication 1,
**caractérisé en ce que** lors de l'allongement de l'ébauche, on forme un dispositif de centrage (19) dans la zone d'au moins l'une de ses deux surfaces latérales.
